# EUROPEAN PATENT APPLICATION

(11) **EP 4 783 293 A1**
(43) Date of publication of application: **29.07.2026**
(21) Application number: 25382048.4
(22) Date of filing: 27.01.2025
(51) Int. Cl.: H01M 10/42, H01M 10/48, H01M 50/507, H01M 50/519

(54) **BATTERY CELL CONTACTING SYSTEMS FOR AN ELECTRIC VEHICLE AND SERVICING METHODS**

(71) Applicant: Ficosa Automotive, S.L.U., 08232 Viladecavalls, Barcelona (ES)
(72) Inventor: Trullàs Jimenez, Albert, 08232 Viladecavalls, Barcelona (ES); Castells Riguillo, Joan, 08232 Viladecavalls, Barcelona (ES); Torné Albert, Adrià, 08232 Viladecavalls, Barcelona (ES)
(74) Representative: Bardehle Pagenberg S.L.

(57) **Abstract**

The present disclosure relates to battery cell contacting systems for an electrical vehicle, to electric vehicles and to methods for servicing a battery system of an electric vehicle. A busbar of a battery cell contacting system comprises a connection feature to which a circuit interconnect such as a flexible printed circuit or a flexible flat cable can be releasably attached, for example when a circuit interconnect already attached to the busbar in a permanent manner is damaged.

## Description

### TECHNICAL FIELD

The present disclosure relates to battery cell contacting systems for an electric vehicle. The present disclosure further relates to methods for servicing a battery system of an electric vehicle, in particular a battery cell contacting system of the battery system.

### BACKGROUND

Electric vehicles such as an electric car or truck comprise a plurality of battery cells. The battery cells are configured to store electric energy. The battery cells may for example be lithium-ion batteries, although other types of batteries suitable for powering an electric motor of an electric vehicle may be used. For example, fuel cells or supercapacitors may be used.

An electric vehicle is driven at least in part by an electric motor powered by the plurality of battery cells. As used herein, an electric vehicle may be electrically driven in their entirety, e.g. as electric vehicles, or an electric vehicle may be partially electrically driven, e.g. as a hybrid vehicle.

The battery cells may be grouped and connected into modules in some examples. The modules are then grouped and connected to form a battery pack. A battery pack may comprise hundreds or thousands of battery cells. In other examples, cell grouping into modules is dispensed with, this design or arrangement being referred to as cell-to-pack. The battery pack is usually arranged between the front and rear axles of the electric vehicle.

A battery management system (BMS) includes several components to ensure a safe and efficient operation of a battery pack. A BMS generally comprises a battery cell monitoring circuit (CMC) to monitor the battery cells and a battery management controller (BMC) which acts as the central processing unit of the BMS.

The CMC may measure or monitor voltage of each individual cell or of a group of cells. In use, the measured values may be compared to predetermined limit values for checking whether the cells are operating within safety limits. The CMC may also measure or monitor the temperature of each cell or group of cells.

The CMC is generally configured to perform cell balancing. With cell balancing the charge of battery cells can be balanced, e.g. monitored and corrected, if necessary, to ensure that battery cells are substantially equally charged. Reliable performance and longevity of the battery pack may thereby be achieved. In addition, the BMS is configured to assess the state of health of the battery. For example, the BMC analyzes data from the CMC, and it makes decisions regarding charging, discharging and safety protocols.

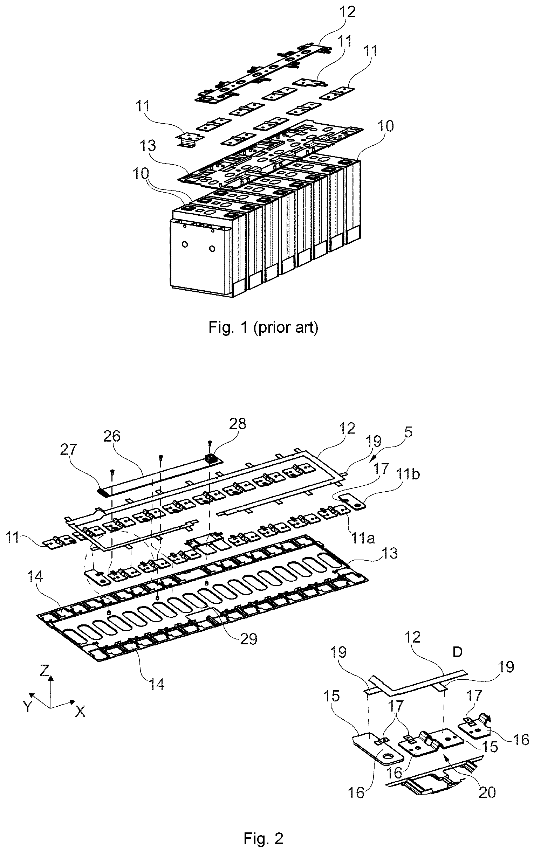

The battery cells are connected, in particular welded, to busbars. Busbars are metallic pieces capable of conducting current, for example out of the battery cells and between the battery cells. Busbars may be provided in different shapes and sizes. In some examples, busbars are flat metal bars or strips, for example made of copper or aluminum. An example of the prior art showing a perspective view of battery cells 10 and a plurality of busbars 11 is schematically shown in figure 1.

The busbars are also fixedly connected, for example welded using laser welding, to a circuit interconnect. In some examples, an original equipment manufacturer (OEM) may weld the circuit interconnect to the busbars. The circuit interconnect may be flexible and may e.g. be a flexible flat cable (FFC) or a flexible printed circuit (FPC). The circuit interconnect may sense and transmit battery cell data such as voltage and temperature directly or indirectly to the CMC. An example of a circuit interconnect 12, in particular an FPC, is also shown in figure 1.

The set or assembly of elements configured to interconnect the individual battery cells of an electric vehicle, for example the cells of a battery module, is generally referred to as a battery cell contacting system (CCS). Examples of an assembled CCSs include a plurality of busbars attached to a frame 13, and a circuit interconnect such as an FPC attached, in particular welded, to the plurality of busbars. Depending on the type of battery cells, the CCS may lack a frame.

The CCS may get damaged in operation. Circuit interconnects such as FFCs or FPCs or elements of circuit interconnects (such as e.g. a temperature sensor) or the connection between a circuit interconnect and one or more busbars can get damaged. High temperatures can degrade the materials of a circuit interconnect, causing it to become brittle or lose electrical conductivity. Excessive current flowing through the circuit interconnect can cause overheating and damage. Flaws in the manufacturing process can result in weak points that are prone to failure under normal operating conditions. Exposure to moisture, battery electrolytes or other chemicals may also lead to corrosion and circuit interconnect failure.

If a circuit interconnect or part thereof gets damaged, it is usually removed. A new circuit interconnect is then connected to the busbars, occupying the place of the damaged circuit interconnect. However, since the damaged circuit interconnect is welded to the busbars, it takes time to remove it, e.g. by cutting it. Also, accessing the cable is not easy due to space constraints. This adds additional time to the replacement operation. And, again due to space constraints, welding the new circuit interconnect to the busbars is complicated and time-consuming. Furthermore, dedicated tools may be required, adding to the difficulty of the process.

Also, since the circuit interconnect is close to the battery cells, the temperature increase linked to welding may affect and damage the battery cells or other components.

The present disclose aims at reducing or eliminating one or more of the above-mentioned disadvantages.

### SUMMARY

In an aspect of the disclosure, a battery cell contacting system for an electric vehicle is provided. The battery cell contacting system comprises a busbar configured to be attached to at least one battery cell of the electric vehicle and to conduct electric current from the at least one battery cell. The battery cell contacting system further comprises a first circuit interconnect attached to the busbar and configured to transmit battery cell data. The busbar comprises a first connection region to which the first circuit interconnect is attached in a fixed manner, and a connection feature configured for releasably attaching to a second circuit interconnect.

According to this aspect, a battery cell contacting system comprises a busbar with a first region to which a first circuit interconnect is attached in a fixed manner, e.g. by laser welding, and a connection feature to which another circuit interconnect can be releasably attached.

Therefore, when the first circuit interconnect is damaged, the second circuit interconnect may be installed to operationally replace the first circuit interconnect. Since the second circuit interconnect is to be attached in a releasable manner, and in particular by using the connection feature of the busbar, the installation may be faster and easier with respect to performing a permanent attachment. The tools required may be less complex, facilitating and speeding installation. In some examples, tools may even be dispensed with (see below).

In examples, the first circuit interconnect, or at least a portion thereof, may remain in place, and in particular may remain fixedly attached to the busbar. I.e., removing the first circuit interconnect, e.g. by cutting a portion of the circuit interconnect, may be dispensed with. Not needing to cut the first circuit interconnect may increase safety (as a cutting operation is dispensed with or at least reduced) and may also speed up the installation of the second circuit interconnect.

Throughout this disclosure, releasable attachment may refer to an attachment which can be removed or dismantled without damaging the attached elements. Fasteners such as bolts can provide a releasable attachment. Clamps, magnetic elements, hook-and-loop fasteners, tape and others also provide releasable attachment. Non-permanent or temporary attachment may be used throughout this disclosure as synonyms of releasable attachment. A busbar may be manufactured to comprise a region that is prepared for such a releasable attachment.

Herein, fixed attachment may refer to an attachment which cannot be removed or dismantled without damaging the attached elements or the attaching elements. Examples of fixed attachment include crimping, welding, soldering, brazing, gluing with adhesives that are cured and others. Permanent attachment may be used herein as a synonym of fixed attachment.

Throughout this disclosure, a circuit interconnect may be understood as an element configured to connect two or more circuit elements, in particular electrically. For example, flexible flat cables (FFCs) or flexible printed circuits (FPCs) may be examples of circuit interconnects.

The connection feature may comprise one either a male connector for connecting to a female connector of the second circuit interconnect, or a female connector for connecting to a male connector of the second circuit interconnect. A male-female connection may therefore be provided, which is an easy and reliable manner of releasably attaching the second circuit interconnect and the busbar. Depending on the style of the connectors used, the tooling used may be simple or may even be dispensed with.

The connection feature may be configured to be quickly connected (i.e. releasably attached) and disconnected from the second circuit interconnect. Quick connects and quick disconnect connectors allow for a fast and easy releasable attachment. For example, the connection feature of the busbar may be a faston tab configured to be connected to a faston receptacle of the second circuit interconnect. Tooling may not even be needed to perform this type of connection.

In some examples, the connection feature of the busbar may be a through hole configured to receive a fastener to releasably attach the second circuit interconnect and the busbar. The fastener may for example be a screw. The screw may go through the second circuit interconnect, e.g. through a tap of strip protruding from a body of the second circuit interconnect, and through the busbar hole. A nut may be threaded to the bolt to secure the releasable attachment. A clinch nut may alternatively be used in some examples.

In yet further examples, a fastener to connect to a busbar may be a self-tapping screw. The busbar may include a region that is prepared or reserved for a connection with a busbar through a self-tapping screw. Such a region may be free from other contacts and attachments.

The cell contacting system may further comprise an auxiliary electrical device. The device may have a first connection region to which the first circuit interconnect is attached in a fixed manner, and a first connection feature for releasably attaching the auxiliary electrical device to the second circuit interconnect. Accordingly, installation of the second circuit interconnect may further be facilitated, as the second circuit interconnect may also be releasably attached to the auxiliary electrical device. The auxiliary electrical device may be an overcurrent protection device in some examples.

The auxiliary electrical device may have an input and an output. Both the input and the output may be configured for a fixed connection to the first circuit interconnect and for a releasable attachment to the second circuit interconnect. I.e. an input side of the auxiliary electrical device may comprise a first connection region to which the first circuit interconnect is attached in a fixed manner, and a first connection feature for releasably attaching the auxiliary electrical device to the second circuit interconnect, and an output side of the auxiliary electrical device may include a second connection region to which the first circuit interconnect is attached in a fixed manner, and a second connection feature for releasably attaching the auxiliary electrical device to the second circuit interconnect.

The cell contacting system may further comprise an electronics carrier. The first and/or second circuit interconnect can be attached or connected to the electronics carrier. The electronics carrier may have a first connector for connecting to the first circuit interconnect, and a second connector for connecting to an element external to the battery cell contacting system, optionally to an element of a battery management system, BMS. The electronics carrier may therefore receive the battery cell data through the first connector. And the electronics carrier may send raw or processed data to an external element, e.g. an element of the BMS. The electronics carrier may be part of the BMS in some examples. The electronics carrier may be or may comprise a cell management controller. The first connector of the electronics carrier may be used to connect the first circuit interconnect and/or the second circuit interconnect, see further below.

In some examples, the battery cell contacting system may comprise the second circuit interconnect. The first and/or the second circuit interconnects may be flexible printed circuits (FPCs) or flexible flat cables (FFCs).

In another aspect of the disclosure, a method for servicing a battery system of an electric vehicle is provided. The battery system comprises a plurality of battery cells and a battery cell contacting system as described herein. The battery cell contacting system comprises a plurality of busbars attached to one or more of the battery cells and a first circuit interconnect fixedly attached to the busbars. The busbars further include a connection feature for releasably attaching to a second circuit interconnect. The method comprises determining that the first circuit interconnect is damaged, and releasably attaching the second circuit interconnect to the connection features of the busbars.

As previously mentioned, the second circuit interconnect may be easily and quickly installed. Once installed, the second circuit interconnect replaces the first circuit interconnect in terms of functionality.

The second circuit interconnect may be arranged adjacent to the first circuit interconnect, in particular facing the first circuit interconnect. In some examples, the second circuit interconnect may touch the first circuit interconnect. A location adjacent to the first circuit interconnect may be suitable for easily and quickly releasably attaching the second circuit interconnect to the busbars. Arrangement of the second circuit interconnect may in some cases be performed before releasably attaching the second circuit interconnect to the connection features of the busbars.

The battery cell contacting system may further comprise an electronics carrier comprising a first connector, and the first circuit interconnect may be connected to the first connector of the electronics carrier. The method may further comprise disconnecting the first circuit interconnect from the first connector of the electronics carrier, and then connecting the second circuit interconnect to the first connector of the electronics carrier. The first circuit interconnect, for example the entire first circuit interconnect or a large portion thereof, may remain in the battery cell contacting system. The second circuit interconnect does not need to be connected to the first connector of the electronics carrier immediately after the first circuit interconnect is disconnected from the first connector. One or more steps may be performed between disconnecting the first circuit interconnect and connecting the second circuit interconnect.

The method may further comprise removing at least a portion of the first circuit interconnect from the battery cell contacting system. For example, the method may comprise removing a portion of the first circuit interconnect connected to the first connector of the electronics carrier. Disconnecting the first circuit interconnect or removing a portion of the first circuit interconnect connected to the electronics carrier may allow to reuse the first connector of the electronics carrier to attach the second circuit interconnect. This may be less expensive and complex than for example adding another connector and additional hardware.

### BRIEF DESCRIPTION OF THE DRAWINGS

Non-limiting examples of the present disclosure will be described in the following, with reference to the appended figures, in which:
Figure 1 schematically illustrates an exploded perspective view of an example of battery cells and a battery cell contacting system. Figure 1 belongs to the prior art.
Figure 2 schematically illustrates an exploded perspective view of an example of a battery cell contacting system.
Figure 3 schematically illustrates an exploded perspective view of the example of the battery cell contacting system of figure 2 further including an example of a second circuit interconnect.
Figure 4 schematically illustrates a perspective view of the battery cell contacting system of figure 3 in an assembled state, i.e. with the second circuit interconnect already installed.
Figure 5 illustrates a flowchart of an example of a method for servicing a battery system of an electric vehicle.

The figures refer to example implementations and are only to be used as an aid for understanding the claimed subject matter, not for limiting it in any sense.

### DETAILED DESCRIPTION OF EXAMPLES

Figure 2 schematically illustrates an exploded perspective view of an example of a battery cell contacting system 5 (CCS) for an electrical vehicle. An enlarged view of the portion enclosed by circle D is illustrated at the bottom of the figure.

In an aspect of the disclosure, a battery cell contacting system 5 for an electrical vehicle is provided. The battery cell contacting system 5 comprises a busbar 11 configured to be attached to at least one battery cell for the electric vehicle and to conduct electric current from the at least one battery cell. The battery cell contacting system 5 further comprises a first circuit interconnect 12 attached to the busbar 11 and configured to transmit, i.e. carry, battery cell data, in particular for its monitoring and/or control by an element of a BMS, e.g. a CMC.

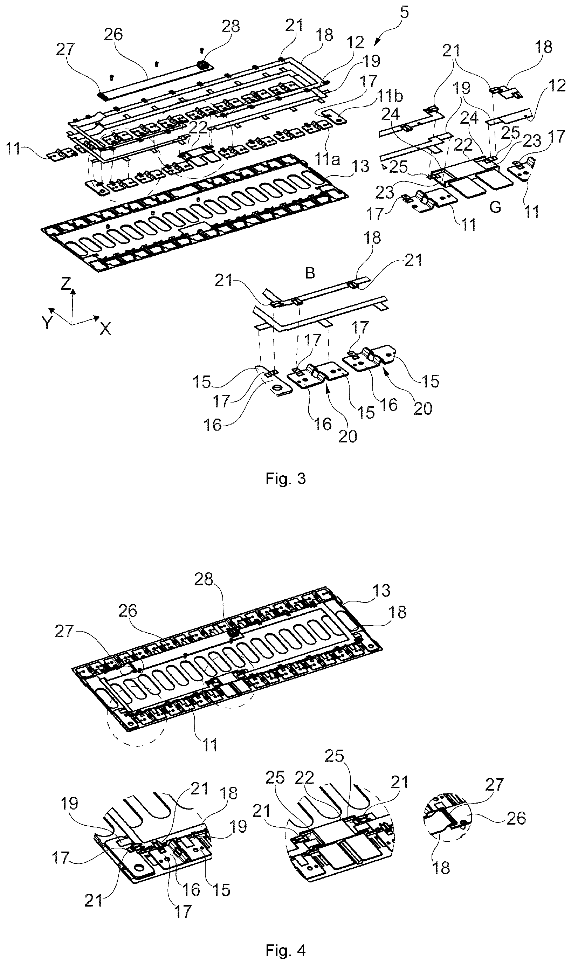

The busbar 11 comprises a first connection region 15 to which the first circuit interconnect 12 is attached in a fixed manner. The busbar 11 also comprises a connection feature 17 to which a second circuit interconnect 18 (see figure 3) is releasably attachable. For example, the busbar 11 may comprise a second connection region 16 to which the second circuit interconnect 18 is releasably attachable through the connection feature 17 of the second connection region 16.

The first circuit interconnect 12 may therefore be attached in a fixed or permanent manner, e.g. welded, to the first connection region 15 of the busbar 11. If the first circuit interconnect 12 fails, a second circuit interconnect 18 may be releasably attached to the connection feature 17 of the busbar 11. Removing the first circuit interconnect 12 from the battery cell contacting system 5 is therefore not necessary. Installation of the second circuit interconnect 18 may be performed more easily and faster than removal of the first circuit interconnect 12 and installation of a new first circuit interconnect.

A perspective view of the example of the battery cell contacting system 5 of figure 2 further including an example of a second circuit interconnect is shown in figure 3. An enlarged view of the portion enclosed by circle B is illustrated at the bottom of the figure.

In the example of figures 2 and 3, a plurality of busbars 11 is provided. In these or in other examples of a battery cell contacting system 5, the battery cell contacting system 5 may further comprise a frame 13 configured to support the busbars 11. The frame 13 may include a plurality of trough holes 14 through which the busbars 11 and a plurality of battery cells can be attached. The busbars 11 are shaped as strips and are arranged in two rows in figures 2 and 3. The busbars 11 are arranged on the corresponding frame 13. The frame 13 has a CCS side on which the busbars 11 are arranged, and a battery cell side on which the battery cells are arranged. The busbars 11 may be attached in a fixed or permanent manner, e.g. welded, to the battery cells through the holes 14 of the frame 13 allowing contact between the busbars 11 and the battery cells.

In the examples of figures 2 - 4, openings 29 are provided for allowing battery gas exhaustion. The battery cells (not shown in these figures but shown in figure 1) electrically connect with two different busbars, the two different busbars being in two different rows in the examples of the figures. Depending for example on the arrangement of the battery cells, and therefore of their terminals, the busbars may be arranged differently in other examples.

Each busbar 11 comprises a first connection region 15 to which the first circuit interconnect 12 is to be welded and a connection feature 17, e.g. in a second connection region 16, to which the second circuit interconnect 18 may be releasably attached. The connection feature 17 may be attached in a fixed manner to the busbar 11. The connection feature 17 may be integrally formed with the busbar 11 in some other examples. Specifically, the busbar 11 may be manufactured with the connection feature 17 already included as part of the busbar.

The busbars 11 may have different shapes or configurations. For example, some busbars 11a may have a protruding region 20 between the first connection region 15 and the second connection region 16. The protruding region 20 may act as a separator between the first connection region 15 and the second connection region 16. The use of the surface of the busbar 11 is also optimized, since the first circuit interconnect 12 is attached to the first connection region 15 at one side of the busbar 11 and the second circuit interconnect 18 may be attached to the other side of the busbar 11. The protruding region 20 may help to absorb mechanical stresses if the battery cells expand. The protruding region 20 may also help to appropriately arrange the corresponding busbar 11. For example, the frame 13 may comprise ribs, and the protruding regions of the busbars may face the ribs.

Other busbars 11b may lack such a protruding region 20. For example, the end busbars 11b, i.e. the busbars that are connected to a single battery cell only as they may carry electrical current into and out of the module of battery cells, may have a shape or configuration different from the busbars 11a which are connected to two cells, as they may carry electrical current between two adjacent cells.

The first circuit interconnect 12 may comprise a body and a plurality of tabs 19 extending from the body. The tabs 19 are to be attached in a fixed manner, e.g. welded, to the corresponding first connection regions 15 of the busbars 11. The tabs 19 may include one or more sensors. For example, the tabs 19 may include temperature sensors such as thermistors to monitor battery cell temperature.

The tabs 19 and the busbars 11, specifically the first connection region 15 of the busbars 11, may be made of a same material, e.g. a metal. This may also be applicable to the connection feature 17 in some examples: a busbar 11 may comprise a metallic material, and the connection feature 17 may comprise the same metallic material. For example, the second connection region 16 and the connection feature 17 may be made of aluminum or copper. The first connection region 15 may also be made of aluminum or copper. In other examples, the materials may be different. For example, the busbars may be made of aluminum and the tabs 19 may be made of nickel.

The connection feature 17 may comprise one of a male or female connector for connecting to the other of a male and female connector of the second circuit interconnect 18. For example, the second circuit interconnect 18 may comprise a body and at least one connector or connection feature 21, e.g. a plurality of busbar connector or connection features 21. The connection features 21 of the second circuit interconnect 18 and the connection features 17 of the busbars 11 may be configured to form male-female connections which are releasable.

In the example of figure 3 and in other examples, the connection features 17 of the busbars 11 are faston tabs configured to be connected to faston receptacles 21 of the second circuit interconnect 18.

In general, the connection feature 17 of the busbar 11 is configured to be quickly connected to and disconnected from the second circuit interconnect 18, for example through quick connects and quick disconnect connectors such as faston tabs and faston receptacles.

In some examples, the connection feature 17 of the busbar 11 and the connection feature 21 of the second circuit interconnect 18 may be configured to provide a snap-fit connection. A snap-fit connection may be a connection which can be achieved quickly and easily, and may therefore be a suitable and advantageous type of connection between the second circuit interconnect 18 and the busbars 11.

The size and shape of the first circuit interconnect 12 and the second circuit interconnect 18, e.g. of their bodies, may be similar, as illustrated in the example of figure 3. The second circuit interconnect 18 may be arranged adjacent, optionally on top of (along the Z direction), the first circuit interconnect 12. In the example of figure 3, the first circuit interconnect 12 is between the frame 13 and the second circuit interconnect 18.

The first circuit interconnect 12 and the second circuit interconnect 18 may be flexible conductors such as flexible flat cables (FFCs) or flexible printed circuits (FPCs). In the examples of figures 2 and 3, the first 12 and the second 18 circuit interconnects are FPCs. The first circuit interconnect 12 and the second circuit interconnect 18 may alternatively be rigid conductors such as rigid electric carriers (e.g. rigid printed circuit boards) with flexible faston tabs. The first circuit interconnect 12 and the second circuit interconnect 18 may be equal (or very similar), except for the connectors to connect to the busbars 11. In this sense, the first circuit interconnect 12 and the second circuit interconnect 18 may have the same size and shape as in the examples of figures 3 and 4.

The first circuit interconnect 12 and the second circuit interconnect 18 may comprise monitoring sensors, e.g. temperature sensors and others. The temperature sensors may be thermistors in some examples. The temperature sensors may monitor the temperature of the busbars 11, as this temperature may be a reliable indicator of the temperature of the battery cells.

The connection feature 17 of the busbar 11 (or likewise a connection feature 21 of the second circuit interconnect 18) may be configured to bridge a gap between the second circuit interconnect 18 and the busbar 11 during the releasable attachment of the second circuit interconnect 18 and the second connection region 16 of the busbar 11. This gap may at least in part arise due to the first circuit interconnect 12, or a portion thereof, not being removed. I.e., the presence of at least a portion of the first circuit interconnect 12 when installing the second circuit interconnect 18 creates a gap between the second circuit interconnect 18 and the busbar 11. The connection features 21 of the second circuit interconnect 18 may be arranged on a side of the second circuit interconnect 18 configured to face opposite the battery cells, see the examples of figures 3 and 4.

For example, the connection feature 17 of the busbar 11 may be Z-shaped, see the example of figure 3. The gap may in particular extend along a direction perpendicular to a plane in which the busbars 11 are arranged. For example, if the busbars 11 mainly lie in an XY plane, the gap would be in a direction perpendicular to that XY plane. In figure 3, the first circuit interconnect 12, the second circuit interconnect 18 and the frame 13 also mainly lie in the XY plane. The gap to be bridged may therefore extend in a Z direction. In general, the shape of the connection feature 17 may be any suitable shape allowing to bridge the gap.

Since the first circuit interconnect 12, or at least a portion thereof, may particularly remain in place even if it is damaged, the connection features 17 of the busbars 11 and/or the connection features 21 of the second circuit interconnect 18 may be configured, e.g. sized and shaped, to account for the distance between the second circuit interconnect 18 and the busbars 11 due to the presence of the first circuit interconnect 12. The installation of the second circuit interconnect 18 may be easier with connection features 17, 21 comprising a raised portion serving as a bridge.

In some examples the connection feature 17 of the busbar 11 may be a through hole (not shown in the figures) configured to receive a fastener to releasably attach the second circuit interconnect 18 and the busbar 11. The fastener may be a screw. In some of these examples, the second circuit interconnect 18 may comprise connection features or connectors 21 configured to receive the fasteners. The connection features 21 may be strips, e.g. metallic strips, and the fasteners may go through the connection features 21 and the through holes of the busbars 11, releasably attaching them. Nuts, optionally clinch nuts, may be used in combination with the screws to secure the second circuit interconnect 18 and the busbars 11.

The battery cell contacting system 5 may further comprise an auxiliary electrical device 22. The auxiliary electrical device 22 may have a first connection region 23 to which the first circuit interconnect 12 is attached in a fixed manner, and a connection feature 25 for releasably attaching the second circuit interconnect 18 to the auxiliary electrical device 22. The auxiliary electrical device 22 may comprise a second connection region 24 including the connection feature 25. Accordingly, installation of the second circuit interconnect 18 may further be facilitated, as the second circuit interconnect may also be releasably attached to the auxiliary electrical device 22.

In some examples, the auxiliary electrical device may be an overcurrent protection device, which may e.g. be an overcurrent interrupter. An overcurrent interrupter may be understood as a device designed to protect an electrical circuit from damage caused by overcurrents by interrupting the current flow. For example, if the current is above a safety threshold, the overcurrent interrupter interrupts the current flow. The overcurrent interrupter may operate once before it is replaced, e.g. a fuse, or may operate more than once, e.g. a polyfuse. Other examples of overcurrent protection devices for example include circuit breakers and switches.

An example of an auxiliary electrical device 22 being an overcurrent protection device 22 is illustrated in figures 2, 3 and 4. An enlarged view of the portion enclosed by circle G of figure 3 including the overcurrent protection device 22 is illustrated at the right of the figure. The overcurrent protection device 22 helps to protect the battery cell contacting system 5 when overcurrents are flowing. The auxiliary electrical device 22 may be or may comprise a sensor or other suitable device in other examples.

The auxiliary electrical device 22, e.g. an overcurrent protection device, may have an input and an output. Both the input and the output may be configured for a fixed connection to the first circuit interconnect and for a releasable attachment to the second circuit interconnect. Each of these may comprise a connection region to which the first circuit interconnect is attached in a fixed manner, and a connection feature for releasably attaching the auxiliary electrical device to the second circuit interconnect.

The details and explanations with respect to the connection features 17 of the busbars 11 are likewise applicable to the connection features 25 of the overcurrent protection device 22. Since the connection feature 17 of a busbar 11 and the connection feature(s) 25 of the overcurrent protection device 22 are configured to allow releasable attachment of the second circuit interconnect 18, they may be the same, e.g. in terms of materials, shape, etc.

In some other examples, the first circuit interconnect 12 and the second circuit interconnect 18 may not be directly attached to the auxiliary electrical device 22. Rather, the auxiliary electrical device 22 may be attached to the busbars 11, and the first circuit interconnect 12 and the second circuit interconnect 18 may also be attached to the busbars 11. The busbars 11 therefore act as a bridge between the auxiliary electrical device 22 and the first circuit interconnect 12 and the second circuit interconnect 18.

The battery cell contacting system 5 may further comprise an electronics carrier 26. The first circuit interconnect 12, and if present, the second circuit interconnect 18, may be connected to the electronics carrier 26. For example, the first circuit interconnect 12 may be connected to the electronics carrier 26 during a first period of time, and the second circuit interconnect 18 may be connected to the electronics carrier during a second period of time, the first and second periods of time not overlapping. The electronics carrier 26 may be part of a BMS or may be connectable to the BMS. In some examples, the electronics carrier 26 may be or may comprise the CMC. The electronics carrier 26 may extend parallel to the frame 13, e.g. in the XY plane.

In this regard, the electronics carrier 26 may comprise a first connector 27 for connecting to the first circuit interconnect 12, and a second connector 28 for connecting to an element external to the battery cell contacting system 5, e.g. to an element of the BMS. The battery cells may therefore be monitored, and cell data may be collected and analyzed to ensure a proper operation of the battery cells.

The first circuit interconnect 12 (and the second circuit interconnect 18) may comprise a root portion connected to the first connector 27. One or more arm portions may extend from such a root portion. In the examples of figures 3 and 4, two arm portions can be seen. Each arm portion is connected to the auxiliary electrical device 22. One of the arm portions extends below the electronics carrier 26 (between the electronics carrier 26 and the frame 13). The root portion may allow to have one first connector 27 instead of e.g. two first connectors 27. Having a single first connector 27 may be cheaper than having more than one first connector 27.

Since in some examples a single first connector 27 is provided, and the first circuit interconnect 12 is arranged between the electronics carrier 26 and the frame 13, this also contributes to the gap between the connection features 21 of the second circuit interconnect 18 and the busbars 11 when the second circuit interconnect 18 is installed. A separation may be provided between the first circuit interconnect 12 and the electronics carrier 26 for allowing the subsequent installation of the second circuit interconnect 18.

The electronics carrier 26 may comprise more than one circuit interconnect connector 27. For example, the electronics carrier 26 may comprise two or more circuit interconnect connectors 27. The first circuit interconnect 12 and the second circuit interconnect 18 may be divided in pieces. The first circuit interconnect 12 may comprise two pieces. One piece may be attached to a first circuit interconnect connector 27 and to a group of busbars 11. And the other piece may be attached to a second circuit interconnect connector 27 and to another group of busbars 11. The two circuit interconnect connectors 27 may e.g. be arranged at a same side of the electronics carrier 26. Likewise, the second circuit interconnect 18 may comprise two pieces, and each piece may be attached to a corresponding circuit interconnect connector 27. Therefore, one of the "pieces" may be functionally replaced while the other is not, in some examples.

The electronics carrier 26 may include a printed circuit board, PCB. The PCB may be rigid, in contrast to the first circuit interconnect 12 and the second circuit interconnect 18. For example, the electronics carrier 26 may comprise a rigid base such as a rigid PCB. The circuit interconnect connector 27 may be attached to the base, e.g. a rigid PCB.

The electronics carrier 26 may further comprise an output connector 28. The output connector 28 may send signals and data to an external element, e.g. an element of the BMS. The output connector 28 may also be attached to the rigid base.

Figure 4 schematically illustrates a perspective view of the battery cell contacting system 5 of figure 3 in an assembled state. Enlarged views of different portions where attachments are present are shown in the bottom of the figure. In the bottom left circle, it is shown that the first circuit interconnect 12, or at least a portion thereof, remains attached (in a fixed manner) to the busbars 11 through the tabs 19. The second circuit interconnect 18 is also attached (in a releasable manner) to the busbars 11 through the connection features 17 of the busbars 11 and the connection features 21 of the second circuit interconnect 18.

In the bottom middle circle, it is shown that the second circuit interconnect 18 is also releasably attached to the auxiliary electrical device 22 via the connection features 21 of the second circuit interconnect 18 and the connection features 25 of the auxiliary electrical device 22. And in the bottom right circle, it is shown that the second circuit interconnect 18 is attached to the circuit interconnect connector 27 of the electronics carrier 26.

As previously explained, the cell contacting system may further comprise a frame 13. The frame 13 may be configured to be arranged adjacent the battery cells, specifically between the busbars 11 and the battery cells. The frame 13 may comprise a plurality of through-holes 14 for suitably attaching the busbars 11 to the battery cells.

An electric vehicle may comprise a battery cell contacting system comprising the first circuit interconnect 12 as described herein. When the first circuit interconnect is damaged, the second circuit interconnect 18 may be installed.

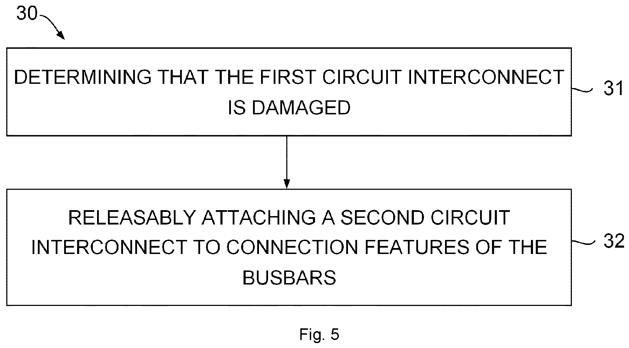

In the following, several manners of installing the second circuit interconnect 18 will be explained. According to a further aspect of the disclosure, a method for servicing a battery system of an electric vehicle is provided. The battery system comprises a plurality of battery cells and a battery cell contacting system 5. The battery cell contacting system 5 comprises a plurality of busbars 11 attached, e.g. welded, to one or more of the battery cells. The battery cell contacting system 5 further comprises a first circuit interconnect 12 fixedly attached to the busbars 11. The busbars 11 further include a connection feature 17 for releasably attaching to a second circuit interconnect 18. For example, the busbars 11 may include a first connection region 15 and a second connection region 16 as already explained. A flowchart of an example of method 30 is shown in figure 5.

The method comprises, at block 31, determining that the first circuit interconnect 12 is damaged. Damage determination may include electrical testing to e.g. check if there is an open electrical circuit, visual inspection to e.g. detect cracks or discoloration of the circuit interconnect 12, thermal imaging to e.g. detect hotspots in the circuit interconnect 12, signal quality testing to check whether the signals transmitted through the circuit interconnect 12 have degraded, and others. For example, the BMS may detect that a discrepancy in voltage or temperature has arisen across the battery cells, and this may be indicative of damage of the first circuit interconnect 12.

The method further comprises, at block 32, releasably attaching the second circuit interconnect 18 to the connection features 17 of the busbars 11. For example, a releasable male-female connection may be achieved between the male connection features 17 of the busbars 11 and the female connection features or connectors 21 of the second circuit interconnect 18 (or likewise between female connection features of the busbars and male connection features of the second circuit interconnect).

To perform the releasable connection, removing the entire first circuit interconnect 12, or at least a portion of it, from the battery cell contacting system 5 may be dispensed with. A faster and easier installation of the second circuit interconnect 18 may be achieved, as cutting the first circuit interconnect 12 to separate it from the busbars 11 can be avoided. Also, the use of dedicated or complex tooling may be reduced or even avoided, as a removable attachment may be obtained with reduced or no tooling. For example, if the connection features of the busbars 11 and the second circuit interconnect 18 are configured to provide a "quick" connection, then the releasable attachment may be easily and quickly achieved.

It should be noted that, in comparison to cutting the first circuit interconnect 12 and fixedly attaching the second circuit interconnect 18 to the busbars 11, a more efficient installation of the second circuit interconnect 18 may still be achieved if the body of the first circuit interconnect 12 is entirely cut and removed from the battery system. This is due to the fact that the second circuit interconnect 18 would still be attached to the busbars 11 in a releasable manner instead of in a permanent manner. Therefore, the installation of the second circuit interconnect may still be easier and faster. It should be noted that even if the entire body of the first circuit interconnect 12 is cut and removed, part of the first circuit interconnect 12 (the tabs 19) still remains attached to the busbars 11 in a permanent manner.

The installation of the second circuit interconnect 18 may even be faster if the entire first circuit interconnect 12 or a large portion thereof is not cut and taken out of the battery system.

Before releasably attaching the second circuit interconnect 18 to the connection features 17 of the busbars 11, the second circuit interconnect 18 may be arranged adjacent to the first circuit interconnect 12, for example next to and facing the first circuit interconnect 12. This may facilitate releasably attaching the second circuit interconnect 18 to the busbars 11. The little space available may also be well used in this manner.

The battery cell contacting system 5 system may further comprise an electronics carrier 26 comprising a first connector 27, and the first circuit interconnect 12 may be connected to the first connector 27 of the electronics carrier. The method may further comprise disconnecting the first circuit interconnect 12 from the first connector 27 of the electronics carrier 26, and then (but not necessarily immediately after) connecting the second circuit interconnect 18 to the first connector 27 of the electronics carrier 26. Therefore, the circuit interconnect connector 27 which was already present in the battery system may be reused. The first circuit interconnect 12, for example the entire first circuit interconnect 12 or a large portion thereof, may remain in the battery cell contacting system 5.

The method may further comprise removing at least a portion of the first circuit interconnect 12 from the battery cell contacting system 5 before releasably attaching the second circuit interconnect 18. For example, the method may comprise removing a portion of the first circuit interconnect 12 connected to the first connector 27 of the electronics carrier 26.

For example, the first circuit interconnect 12 may be disconnected from the circuit interconnect connector 27 of the electronics carrier 26 and an end portion thereof may be cut. This may allow to connect the second circuit interconnect 18 to the circuit interconnect connector 27 and to create additional space for a portion of the second circuit interconnect 18 that is to be attached to the electronics carrier 26. This step may be performed before the second circuit interconnect 18 is releasably attached to the busbars 11. For example, a portion of the first circuit interconnect 12 may be removed, and then the second circuit interconnect 18 may be attached to the busbars 11 and to the electronics carrier 26.

The method may further comprise releasably attaching the second circuit interconnect 18 to an auxiliary electrical device 22, e.g. an overcurrent protection device 22, specifically through the connection features 21 of the second circuit interconnect 18 and the connection features 25 of the auxiliary electrical device 22. The first circuit interconnect 12 may remain attached to the auxiliary electrical device 22.

Details and explanations of the method of this aspect may be applicable to the other aspects disclosed herein, and *vice versa.* For example, the method may comprise using screws to releasably attach the second circuit interconnect 18 and the busbars 11.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A battery cell contacting system for an electric vehicle, the battery cell contacting system comprising:
a busbar configured to be attached to at least one battery cell of the electric vehicle and to conduct electric current from the at least one battery cell;
a first circuit interconnect attached to the busbar and configured to transmit battery cell data,
wherein the busbar comprises:
a first connection region to which the first circuit interconnect is attached in a fixed manner; and
a connection feature configured for releasably attaching to a second circuit interconnect.

2. The battery cell contacting system of claim 1, wherein the connection feature comprises either a male connector for connecting to a female connector of the second circuit interconnect, or a female connector for connecting to a male connector of the second circuit interconnect.

3. The battery cell contacting system of claim 1 or 2, wherein the connection feature is configured to be quickly connected and disconnected from the second circuit interconnect.

4. The battery cell of any of claims 1 - 3, wherein the connection feature is a faston tab configured to be connected to a faston receptacle of the second circuit interconnect.

5. The battery cell contacting system of any of claims 1 - 3, wherein the connection feature of the busbar is a through hole configured to receive a fastener to releasably attach the second circuit interconnect and the busbar, and in particular wherein the fastener is a screw.

6. The battery cell contacting system of any of claims 1 - 5, further comprising an auxiliary electrical device having a first connection region to which the first circuit interconnect is attached in a fixed manner and a first connection feature for releasably attaching the auxiliary electrical device to the second circuit interconnect.

7. The battery cell contacting system of any of claims 1 - 6, further comprising an electronics carrier, wherein the electronics carrier has a first connector for connecting to the first circuit interconnect, and a second connector for connecting to an element external to the battery cell contacting system, optionally to an element of a battery management system, BMS.

8. The battery cell contacting system of claim 7, wherein the electronics carrier is or comprises a cell management controller, CMC.

9. The battery cell contacting system according to any of claims 1 - 8, further comprising the second circuit interconnect.

10. The battery cell contacting system according to any of claims 1 - 9, wherein the first and/or the second circuit interconnects are flexible printed circuit or flexible flat cables.

11. The battery cell contacting system according to any of claims 1 - 10, further comprising a frame configured to be arranged adjacent the at least one battery cell, wherein the frame is arranged between the busbar and the at least one battery cell, and wherein the frame comprises at least one through-hole for attaching the busbar to the at least one battery cell.

12. A method for servicing a battery system of an electric vehicle, the battery system comprising:
a plurality of battery cells and a battery cell contacting system, the battery cell contacting system including:
a plurality of busbars attached to one or more of the battery cells, and
a first circuit interconnect fixedly attached to the busbars, wherein the busbars further include a connection feature for releasably attaching to a second circuit interconnect, the method comprising:
determining that the first circuit interconnect is damaged; and
releasably attaching the second circuit interconnect to the connection features of the busbars.

13. The method of claim 12, comprising arranging the second circuit interconnect adjacent to the first circuit interconnect, in particular facing the first circuit interconnect.

14. The method of claims 12 or 13, wherein the battery system further comprises an electronics carrier comprising a first connector, and the first circuit interconnect is connected to the first connector of the electronics carrier, the method further comprising disconnecting the first circuit interconnect from the first connector of the electronics carrier and then connecting the second circuit interconnect to the first connector of the electronics carrier.

15. The method of any of claims 12 - 14, further comprising removing at least a portion of the first circuit interconnect from the battery cell contacting system.
